# EUROPEAN PATENT APPLICATION

(11) **EP 1 790 512 A2**
(43) Date of publication of application: **30.05.2007**
(21) Application number: 06002701.8
(22) Date of filing: 10.02.2006
(51) Int. Cl.: B60J 5/04

(54) **Side impact protection beam for a motor vehicle door**

(30) Priority: 28.11.2005 DE 202005018612 U
(71) Applicant: Wagon Automotive GmbH, 63857 Waldaschaff (DE)
(72) Inventor: Lejeune, Frédéric, 78370 Plaisir (FR)
(74) Representative: Gesthuysen, von Rohr & Eggert

(57) **Abstract**

A side impact protection beam for a motor vehicle door, which is designed as an elongated profiled element (2) defining a longitudinal direction and is configured as a rolled profile or roll-formed profile of flat-strip metal material. In this arrangement, as viewed in the transverse direction of the flat-strip material, a central section of the flat-strip material forms a rear wall (3) of the profiled element (2) and the two outer sections of the flat-strip material are bent back inwardly toward the central section so that they in each case form a virtually closed hollow-chamber profile (4). Further the edges (6) of the outer sections forming the hollow-chamber profiles (4) are at a small distance from the central section forming the rear wall (3) and are not welded or fixedly connected in some other way to said central section. The rear wall (3) is designed to be smoothly continuous and the outer sections forming the hollow-chamber profiles (4) are bent over at their edge region into the respective hollow chamber (5) so as to form a narrow edge strip (7) each.

## Description

The invention relates to a side impact protection beam for a motor vehicle door, in particular for a side door of an automobile or delivery truck, having the features of the preamble of claim 1. Another subject of the invention is a motor vehicle door in which such a side impact protection beam is installed.

Side impact protection beams of the type in question serve to reinforce motor vehicle doors and to absorb external forces acting laterally on the motor vehicle door, such as those occurring during an accident, for example. The interior or passenger cell of the motor vehicle body is intended to be protected as a result.

The side impact protection beam is arranged in the motor vehicle door so as to extend approximately in the longitudinal direction of the vehicle body and is fastened at its two ends to the frame of the motor vehicle door. It is possible to provide even better prevention against the door curving into the interior of the vehicle body when subjected to externally acting forces if provision is made to contour the side impact protection beam in the longitudinal direction by bending, i.e. slightly curving the beam to the outside to follow the sweep of the outer wall of the motor vehicle door. This results in the profiled element of the side impact protection beam following the curvature of the outside of the motor vehicle door. The "longitudinal direction" of the profiled element forming the side impact protection beam is thus to be understood as including such profiled elements which have been contoured by bending.

It is frequently the case that side impact protection beams of the type in question are not installed in the motor vehicle door exactly in the longitudinal direction of the body of the motor vehicle but are situated in an inclined position, as it were "diagonally" in the door box of the motor vehicle door. The longitudinal direction of the vehicle body includes these orientations and simply means only the longitudinal orientation as opposed to the transverse orientation with respect to the body of the motor vehicle.

When mention is made of the fact that the profiled element is configured as a rolled profile or roll-formed profile of flat-strip metal material, this is intended to encompass all types of continuous forming processes which result in a three-dimensional structure, i.e. the profiled element, being produced from the flat-strip metal material.

Finally, it is typical for side impact protection beams of the type in question that the profiled element has its ends adapted to the contour of the installation space in the motor vehicle door by a canting operation or in some other way. It is precisely in the end region of the side impact protection beam that the motor vehicle door is frequently thinner than in the central region. Further internal fittings which may possibly require installation space are situated in the end region. Such end modifications to the cross section of the side impact protection beam are also readily acceptable in the case of the side impact protection beam claimed here.

Side impact protection beams of the type in question have a production-related advantage because they can be produced in one piece from the flat-strip metal material. In order to achieve the desired flexural rigidity, the edges of the outer sections of the flat-strip metal material have up until now been welded to one another and/or to the rear wall of the profiled element. Applying corresponding weld seams requires an additional process step.

The prior art (US-A-5,080,427) which forms the starting point for the present teaching discloses a side impact protection beam for a motor vehicle door which is designed as an elongated profiled element defining a longitudinal direction. The profiled element is configured as a rolled profile or roll-formed profile of flat-strip metal material, in particular of high-strength steel sheet with a thickness of at least 1.5 mm. When viewing the flat-strip steel material of the known side impact protection beam in the transverse direction, a central section of the flat-strip material forms a rear wall of the profiled element. This rear wall is deformed in the center to form a hat profile. The two outer sections of the flat-strip material are bent back inwardly toward the central section so that they in each case form a virtually closed hollow-chamber profile, and these outer sections thereby come into contact with the side walls of the hat profile at their roots. However, the edges are at a small distance of a few millimeters from the rear wall itself and are not welded or fixedly connected in some other way to the rear wall.

Depending on the circumstances of the specific individual case, said side impact protection beam may, as has already been explained above, be slightly curved to the outside, i.e. be contoured by bending to correspond to the sweep of the outer wall of the motor vehicle door.

Those surfaces of the two hollow-chamber profiles and of the central hat profile which point away from the rear wall are situated in one plane, with the result that they can be connected, in particular adhesively bonded, directly to the outer door panel. Nevertheless, the ends of the side impact protection beam are of course anchored to the frame of the motor vehicle door.

The known side impact protection beam on which the invention is based is not only able to be produced in a continuous process from flat-strip metal material but also no longer requires any weld seams. This makes the production very simple. The hat profile formed centrally in the rear wall forms, together with its flanks, supports for the edges of the hollow-chamber profile. When forces occur which act on the motor vehicle door from outside, the hollow-chamber profiles which are open at the inner edges behave almost as closed hollow-chamber profiles because they are supported at their edges on the hat profile.

The hollow-chamber profiles are of continuously arcuate design in cross section. The hollow-chamber profiles are pressed increasingly flat during the deformation due to laterally acting forces. The same occurs with the hat profile in the center of the rear wall.

Although the above-described prior art side impact protection beam for a motor vehicle door, which manages without weld seams, has already been able to be produced in a satisfactory manner, it can be further optimized from a production point of view and in terms of the deformation behavior. Accordingly, the teaching is based on the problem of improving the known side impact protection beam further still from a production point of view and in terms of the deformation behavior.

The above-illustrated problem is solved in the case of a side impact protection beam having the features of the preamble of claim 1 by means of the features of the characterizing part of claim 1.

The rear wall of the claimed side impact protection beam is configured without a hat profile; it is designed to be smoothly continuous. Of course, all of the remarks made in the introductory part, in particular also those in respect of a side impact protection beam which is contoured by bending, apply here. In such a beam, the rear wall of course extends with a correspondingly slight curvature to follow the contour of the motor vehicle door.

Owing to the lack of a hat profile in the center of the rear wall, the inner edges of the outer sections of the flat-strip material which form the hollow-chamber profiles do not find themselves provided with any lateral support in the event of a side impact or the like. This lateral support is replaced according to the invention by the outer sections forming the hollow-chamber profiles being bent over at their edge region into the respective hollow chamber so as to form a narrow edge strip. This results in a supporting region for the edge of the respective hollow-chamber profile against the rear wall, which region is again directed into the hollow chamber. Since this supporting region is separated from the rear wall by a few millimeters, the supporting action comes into play, following the occurrence of the externally acting forces, only shortly after the forces start to act. With the inner wall of the respective hollow chamber having already been somewhat inwardly displaced, the edge of the hollow-chamber profile is supported against the rear wall in a defined manner.

It is thus possible according to the invention to dispense with the central hat profile in the rear wall, thereby saving an operation during the production of the side impact protection beam. The deformation behavior of the side impact protection beam is now only determined, and thereby optimized, by the two virtually closed hollow-chamber profiles.

Preferred embodiments and developments of the side impact protection beam according to the invention form the subject matter of the subclaims.

Particular importance is ascribed here to the measure whereby the profiled element is configured mirror-symmetrically with respect to the mid-plane of the rear wall which includes the normal.

A combination of claims 6 and 8 is particularly recommended for a side impact protection beam in the door box of a motor vehicle door, whereas a combination of claims 7 and 9 is to be recommended for a side impact protection beam which is not in the door box of a motor vehicle door but directly below the window frame on the top shoulder.

It is possible to work in both cases with relatively thin flat-strip material consisting of steel sheet, corresponding to claim 10.

The length of a typical, obliquely installed side impact protection beam in a typical side door of a motor vehicle should be 900 to 950 mm with a weight of about 2.5 kg, whereas a side impact protection beam which, instead of being arranged obliquely, is arranged rectilinearly on the top-shoulder line suffices with a length of 825 to 875 mm and a weight of about 1.5 kg.

Another subject of the invention concerns motor vehicle doors in which side impact protection beams according to the invention are installed. It is important for the side impact protection beams according to the invention that they have their rear wall facing the inside of the motor vehicle when in the installed position, i.e. that the hollow-chamber profiles face the outside of the motor vehicle door, and thus the externally acting forces.

The invention will be explained in more detail below by way of the drawings which illustrate exemplary embodiments. In the drawings,
- Fig. 1: is a schematic view showing a side door of a motor vehicle, with the installed position of a side impact protection beam of the type in question being indicated,
- Fig. 2: shows, in vertical section, the region of the door box of a motor vehicle door according to fig. 1 with a side impact protection beam on the top shoulder and a further side impact protection beam in the door box far below the top shoulder,
- Fig. 3: shows a cross section of a preferred exemplary embodiment of a side impact protection beam for installation in the door box, and
- Fig. 4: shows a cross section of a preferred exemplary embodiment of a side impact protection beam for installation in a lighter motor vehicle door or for installation directly below the top-shoulder line of a motor vehicle door.

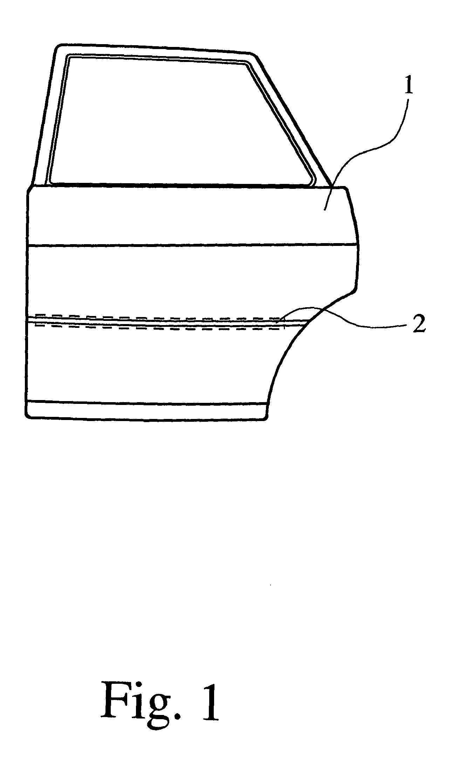

Fig. 1 shows a motor vehicle door 1, represented as a rear side door of a motor vehicle, as an example of the area of application of a side impact protection beam represented there, situated further below in the door box, said beam serving to produce side impact protection in the door region. The side impact protection beam is designed as an elongated profiled element 2 defining a longitudinal direction and is configured as a rolled profile or roll-formed profile of flat-strip metal material. The general observations made in the introductory part of the description with respect to the installed position and arrangement of the side impact protection beam apply.

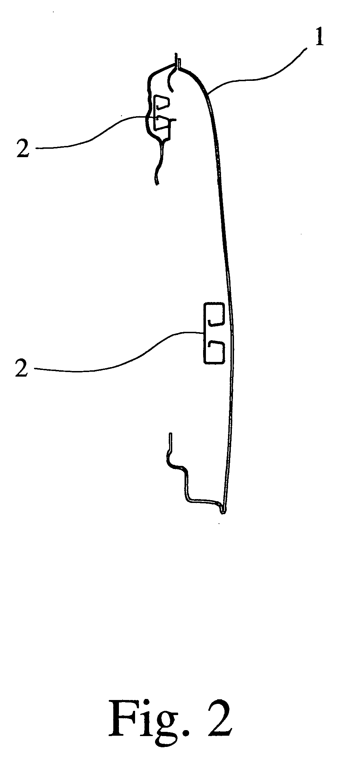

As shown in Fig. 2, a side impact protection beam of the type in question, which is arranged in the motor vehicle door 1 in each case in the longitudinal direction of the body of the motor vehicle, may be installed not only in the door box as side impact protection in the narrower sense but also directly below the top-shoulder line of the motor vehicle door 1 as a type of window-channel profile. All of this is shown by the vertical section through the motor vehicle door 1 which is represented in Fig. 2.

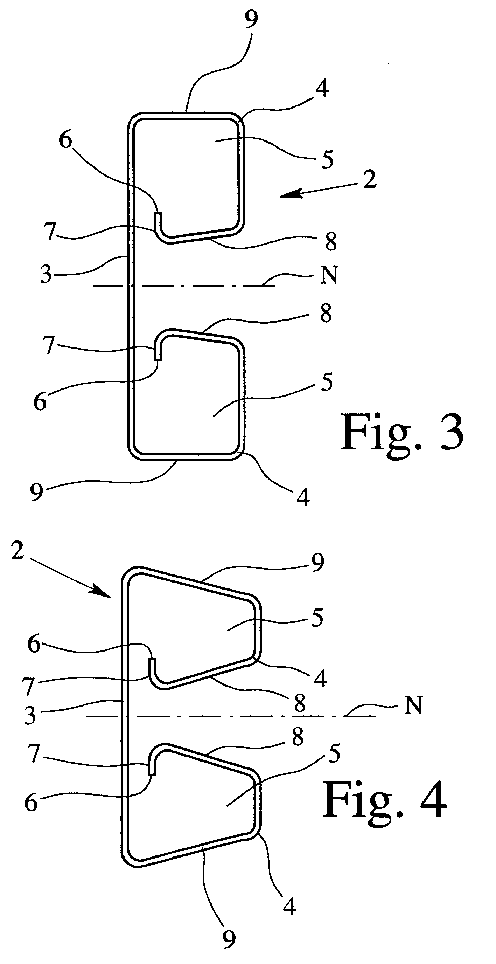

The side impact protection beam represented in exemplary embodiments in Fig. 3 and Fig. 4 is formed by the profiled element 2, which has already been discussed above, in which, as viewed in the transverse direction of the flat-strip material made of metal, a central section of the flat-strip material forms a rear wall 3 of the profiled element 2. The two outer sections of the flat-strip material are bent back inwardly toward the central section, i.e. the rear wall 3, so that they in each case form a virtually closed hollow-chamber profile 4, which in each case forms a hollow chamber 5. The edges 6 of the outer sections forming the hollow-chamber profiles 4 are at a small distance from the central section forming the rear wall 3 and are not welded or fixedly connected in some other way to said central section.

Fig. 3 and Fig. 4 reveal that the rear wall 3 is designed to be smoothly continuous and that the outer sections forming the hollow-chamber profiles 4 are bent over at their edge region into the respective hollow chamber 5 so as to form a narrow edge strip 7 in each case. Provision is made here in particular for the edge strip 7 bent over into the respective hollow chamber to extend substantially parallel to the rear wall 3. The edge strip 7 thus forms a type of supporting region for each hollow-chamber profile 4, which supporting region makes it possible for said hollow-chamber profile 4 to be supported at its open side on the rear wall 3 of the profiled element 2 when externally acting forces occur (i.e. from the right in Fig. 3 and Fig. 4). When externally acting forces occur, the hollow-chamber profile 4, which in the normal state is only virtually closed, with a gap opening it to the inside, becomes a closed hollow-chamber profile 4 which is joined intimately to the rear wall 3 as a result of the externally acting forces.

Provision is made in the exemplary embodiments which are represented and preferred for the distance separating the edge strip 7 from the rear wall 3 to be between about 3 mm and about 8 mm, preferably about 5 mm to 6 mm. The width of the edge strip 7 should be a few millimeters, preferably about 5 mm to 10 mm (measured in relation to the vertex of the angle formed by the edge strip 7 and wall 8).

The exemplary embodiments which are represented and preferred additionally show that, according to a preferred teaching of the invention, the entire profiled element 2 is configured mirror-symmetrically with respect to the mid-plane of the rear wall 3 which includes the normal (indicated by the line N in Fig. 3 and Fig. 4). With this construction, it is therefore not necessary on the production line to be concerned with the installed position of the side impact protection beam in the motor vehicle door.

The exemplary embodiment of a "large" side impact protection beam represented in Fig. 3 is notable for the fact that the hollow-chamber profiles 4 are of boxlike configuration with substantially rectilinear walls 8, 9 and with slightly radiused corners. Provision is made here in particular for the walls 8 of the hollow-chamber profiles 4 which adjoin the edge strips 7 and extend substantially transversely to the rear wall 3 to extend with a slight inward inclination away from the rear wall 3. This cross-sectional design of the profiled element 2 has the advantage that when externally acting forces occur, these forces being understood as acting from the right in Fig. 3, the inner wall 8 of the hollow-chamber profile 4 which extends transversely to the rear wall 3 is first of all pressed inwardly in the direction of the rear wall 3 and in so doing changes its angular position relative to the outer wall 9 which extends transversely to the rear wall 3. Ideally, the edge strip 7 would strike the rear wall 3 in such a way that the inner wall 8 extends rectilinearly exactly perpendicular to the rear wall 3. Said side impact protection beam thus has a virtually optimum deformation behavior because when externally acting forces occur, two box profiles are suddenly available as hollow-chamber profiles 4.

In the case of the "small" side impact protection beam which is represented in Fig. 4, optimized behavior has been achieved by virtue of the fact that the walls 8, 9 of the hollow-chamber profile 4 which extend substantially transversely to the rear wall 3 extend with an inward inclination away from the rear wall 3 in a trapezoid-forming manner.

In respect of the side impact protection beam described further above and represented in Fig. 3, it is particularly recommended for the rear wall 3 to have a width of about 90 mm and for the hollow-chamber profiles 4 to have a width of about 30 mm to about 35 mm and a height of about 30 mm. By contrast, it is particularly recommended in respect of the side impact protection beam represented in Fig. 4 for the rear wall 3 to have a width of about 60 mm and for the hollow-chamber profiles 4 to have a width of about 20 mm to about 25 mm and a height of about 28 mm.

Overall, the side impact protection beams represented are able to manage with relatively thin flat-strip material if the flat-strip metal material used is a flat-strip steel material, in particular one consisting of high-strength steel. A thickness of between 1.0 mm and 2.0 mm is usually sufficient, the thicknesses preferably produced being around 1.2 mm to 1.4 mm, occasionally also 1.5 mm or 1.6 mm. The radii of curvature at the corners are expediently at least approx. 3 mm (inner radii).

The side impact protection beams according to the invention are intended for installation in a motor vehicle door. Accordingly, another subject of the invention is a motor vehicle door having one such side impact protection beam or having two or more such side impact protection beams. This applies particularly to the motor vehicle doors as claimed in claims 11, 12 and 13.

## Claims

1. A side impact protection beam for a motor vehicle door, which is designed as an elongated profiled element (2) defining a longitudinal direction and is configured as a rolled profile or roll-formed profile of flat-strip metal material,
in which arrangement, as viewed in the transverse direction of the flat-strip material, a central section of the flat-strip material forms a rear wall (3) of the profiled element (2) and the two outer sections of the flat-strip material are bent back inwardly toward the central section so that they in each case form a virtually closed hollow-chamber profile (4), and
in which arrangement the edges (6) of the outer sections forming the hollow-chamber profiles (4) are at a small distance from the central section forming the rear wall (3) and are not welded or fixedly connected in some other way to said central section,
**characterized in that**
the rear wall (3) is designed to be smoothly continuous and
the outer sections forming the hollow-chamber profiles (4) are bent over at their edge region into the respective hollow chamber (5) so as to form a narrow edge strip (7) each.

2. The side impact protection beam as claimed in claim 1, **characterized in that**
the edge strip (7) bent over into the respective hollow chamber extends substantially parallel to the rear wall (3).

3. The side impact protection beam as claimed in claim 1 or 2, **characterized in**
**that**
the distance separating the edge strip (7) from the rear wall (3) is between about 3 mm and about 8 mm, preferably about 5 mm to 6 mm, and/or wherein the width of the edge strip (7) is about 5 mm to 10 mm.

4. The side impact protection beam as claimed in one of claims 1 to 3, **characterized in that**
the profiled element (2) is configured mirror-symmetrically with respect to the mid-plane of the rear wall (3) which includes the normal (N).

5. The side impact protection beam as claimed in one of claims 1 to 4, **characterized in that**
the hollow-chamber profiles (4) are of boxlike configuration with substantially rectilinear walls (8, 9) and with slightly radiused corners.

6. The side impact protection beam as claimed in claim 5, **characterized in that** the walls (8) of the hollow-chamber profiles (4) which adjoin the edge strips (7) and extend substantially transversely to the rear wall (3) extend with a slight inward inclination away from the rear wall (3).

7. The side impact protection beam as claimed in one of claims 1 to 5, **characterized in that**
the walls (8, 9) of the hollow-chamber profile (4) extending substantially transversely to the rear wall (3) extend with an inward inclination away from the rear wall (3) in a trapezoid-forming manner.

8. The side impact protection beam as claimed in one of claims 1 to 7, in particular as claimed in claim 6, **characterized in that**
the rear wall (3) has a width of about 90 mm and the hollow-chamber profiles (4) have a width of about 30 mm to about 35 mm and a height of about 30 mm.

9. The side impact protection beam as claimed in one of claims 1 to 7, in particular as claimed in claim 7, **characterized in that**
the rear wall (3) has a width of about 60 mm and the hollow-chamber profiles (4) have a width of about 20 mm to 25 mm and a height of about 28 mm.

10. The side impact protection beam as claimed in one of claims 1 to 9, **characterized in that**
the flat-strip material consists of steel sheet having a thickness between 1.0 mm and 2.0 mm, preferably between about 1.2 mm and about 1.4 mm.

11. A motor vehicle door having a side impact protection beam as claimed in one of claims 1 to 10, said beam being installed with the rear wall (3) facing the inside of the motor vehicle door (1).

12. A motor vehicle door having a side impact protection beam as claimed in claims 6, 8 and 10 installed horizontally or with an inclination in the door box below the top-shoulder line, with the rear wall (3) facing the inside of the motor vehicle door (1).

13. A motor vehicle door, in particular as claimed in claim 12, having a side impact protection beam as claimed in claims 7, 9 and 10 installed horizontally or with an inclination close to the window channel on the top-shoulder line and/or in the door box below the top-shoulder line, each side impact protection beam being installed with the rear wall (3) facing the inside of the motor vehicle door (1).
